# EUROPEAN PATENT APPLICATION

(11) **EP 4 425 850 A1**
(43) Date of publication of application: **04.09.2024**
(21) Application number: 22948258.3
(22) Date of filing: 28.06.2022
(51) Int. Cl.: H04L 12/46, H04L 45/00, H04L 101/659

(54) **PACKET PROCESSING**

(71) Applicant: New H3C Technologies Co., Ltd., Hangzhou, Zhejiang 310052 (CN)
(72) Inventor: LI, Hao, Beijing 100102 (CN)
(74) Representative: IPAZ
(86) International application number: PCT/CN2022/101717
(87) International publication number: WO 2024/000135

(57) **Abstract**

The present disclosure provides packet processing and relates to the technical field of communications. The solution of the present disclosure includes: receiving a first packet sent by a data plane of a network device, wherein the first packet includes a first SID, first encapsulation information, and notification information that includes a first head node address; if there is a first cache entry associated with the first SID locally and a second head node address included in the first cache entry is the same as the first head node address, sending the first SID and the first encapsulation information to the data plane, so that the data plane updates the stored second encapsulation information associated with the first SID to the first encapsulation information, so as to avoid the problem that the subsequent forwarding path of the service packet processed by the SF node is unclear and may be a wrong path.

## Description

### Technical Field

The present disclosure relates to the technical field of communications, and in particular to packet processing.

### Background

In the Segment Routing Internet Protocol Version 6 (SRv6) network, after receiving an original service packet, a head node can encapsulate an IPv6 header and a segment routing header (SRH) on the outer layer of the original service packet. The segment routing header includes a segment list, which indicates a forwarding path of the service packet in the SRv6 network, and then the nodes in the SRv6 network can forward the service packet based on the forwarding path.

Service Function Chain (SFC) means that in the process of forwarding service packets, service packets need to be forwarded to service function (SF) nodes of value-added services according to a planning sequence number and processed by SF nodes. Wherein, the service function may specifically be a billing function, a firewall, and the like.

At present, the SRv6 network can be combined with the SFC. According to the actual service requirements, some endpoint nodes in the SRv6 network can be used as Service Function Forwarder (SFF) nodes, and the SFF nodes are connected with Service Function (SF) nodes.

An SRv6 SID and its corresponding function are newly defined in the existing RFC protocol, namely End.AD SID. After receiving a service packet whose destination address is End.AD SID, the SFF can strip off the IPv6 header and SRH encapsulated on the outer layer of the service packet, and send the original service packet to the SF nodes. In addition, the SFF nodes cache the IPv6 header and SRH information (also called encapsulation information) on the data plane. After receiving the service packet processed by the SF nodes, the SFF nodes re-encapsulate the IPv6 header and SRH for the processed service packet based on the cached encapsulation information, and continue to forward the re-encapsulated service packet.

That is to say, in the existing packet forwarding process, the SFF nodes need to learn the encapsulation information in the data plane. The above learning process imposes high requirements on the data plane and is not practical. In addition, if there is a misconfiguration in the network, for example, on two different head nodes, there are segment lists composed of two different paths but including the same End.AD SID of the same SFF. The head nodes encapsulate the packets respectively according to the two segment lists including the same End.AD SID, that is, when the packets reach the same SFF node, the destination addresses of the packets are the same End.AD SID. In this way, the encapsulation information cached by the SFF node will overlap each other due to two different service flows, and the subsequent forwarding path of the service packet processed by the SF node is unclear and may be an incorrect path.

### Summary

The examples of the present disclosure aim for packet processing, so as to avoid the problem that the subsequent forwarding path of a service packet processed by a SF node is not clear and may be a wrong path. The specific technical solution is as follows.

In a first aspect, an example of the present disclosure provides a packet processing method, which is applied to a control plane of a network device and includes:
receiving a first packet sent by a data plane of the network device, wherein the first packet includes a first SID, first encapsulation information, and notification information that includes a first head node address;
if there is a first cache entry associated with the first SID locally and a second head node address included in the first cache entry is the same as the first head node address, sending the first SID and the first encapsulation information to the data plane, so that the data plane updates stored second encapsulation information associated with the first SID to the first encapsulation information.

In a possible implementation, the first cache entry further includes third encapsulation information, and the third encapsulation information and the second encapsulation information include same content; before sending the first encapsulation information to the data plane, the method further includes:
determining whether the third encapsulation information is the same as the first encapsulation information;
if the third encapsulation information is different from the first encapsulation information, updating the third encapsulation information to the first encapsulation information.

In a possible implementation, after receiving the first packet sent by the data plane of the network device, the method further includes:
if there is a first cache entry associated with the first SID locally and the second head node address included in the first cache entry is different from the first head node address, sending a network configuration error prompt to a management platform.

In a possible implementation, the notification information further includes first indication information, a first sequence number and first life time;
after receiving the first packet sent by the data plane of the network device, the method further includes:
if a value of the first indication information is a first value, determining whether there is a first cache entry associated with the first SID locally;
if there is no first cache entry associated with the first SID locally, creating a second cache entry associated with the first SID, wherein the second cache entry includes the first head node address, the first sequence number, the first life time and the first encapsulation information;
sending the first SID, the first sequence number and the first encapsulation information to the data plane.

In a possible implementation, the first cache entry further includes a timestamp;
after determining whether there is a first cache entry associated with the first SID locally, the method further includes:
if there is a first cache entry associated with the first SID locally, updating the timestamp to current time.

In a possible implementation, the first cache entry further includes second life time; the method further includes:
if it is determined according to the timestamp of the first cache entry that the first cache entry has not been updated within the second life time, deleting the first cache entry;
sending the first SID to the data plane, so that the data plane deletes the encapsulation information associated with the first SID.

In a possible implementation, after receiving the first packet sent by the data plane of the network device, the method further includes:
if the value of the first indication information is a second value, determining whether there is a third cache entry associated with the first SID locally, wherein the third cache entry includes third encapsulation information and a third head node address;
if there is a third cache entry associated with the first SID locally, and the third head node address is the same as the first head node address, deleting the third cache entry;
sending the first SID to the data plane, so that the data plane deletes the encapsulation information associated with the first SID.

In a possible implementation, the notification information further includes second indication information; the method further includes:
if a value of the second indication information is a second value, sending a second packet to a first head node indicated by the first head node address, wherein the second packet includes a processing result of the control plane on the first encapsulation information.

In a possible implementation, the first packet is a specified protocol packet; or, the first packet is a BFD packet;
the first packet further includes a first DOH that carries the notification information; or, the first packet further includes a first SRH including a first TLV structure that carries the notification information.

In a possible implementation, the notification information includes a flags field, a sequence number field, a life time field, and a head node address field;
wherein, the flags field includes 16 bits, wherein two bits are occupied to carry first indication information and second indication information respectively, and remaining bits are reserved fields;
the sequence number field includes 16 bits for carrying a sequence number;
the life time field includes 32 bits for carrying life time of encapsulation information;
the head node address field includes 128 bits for carrying a head node address.

In a possible implementation, the first packet includes an IPv6 header and an SRH, and the first encapsulation information includes information indicated by the IPv6 header and information indicated by the SRH.

In a second aspect, an example of the present disclosure provides a packet processing method, which is applied to a data plane of a network device and includes:
receiving a first packet, wherein the first packet includes a first SID, first encapsulation information, and notification information that includes a first head node address;
if the first SID is a locally configured proxy SID, sending the copied first packet to a control plane of the network device;
receiving the first SID and the first encapsulation information sent by the control plane, and using the first encapsulation information to update locally stored second encapsulation information associated with the first SID;
wherein, the first SID and the first encapsulation information are sent by the control plane when determining that there is a first cache entry associated with the first SID locally and a second head node address included in the first cache entry is the same as the first head node address.

In a possible implementation, the notification information further includes a first sequence number;
sending the copied first packet to the control plane of the network device includes:
if the first sequence number is different from a second sequence number recorded locally, or the first head node address is different from a second head node address recorded locally, or if there is no encapsulation information associated with the first SID locally, sending the copied first packet to the control plane.

In a possible implementation, the method further includes:
receiving a second SID cached by the control plane and third encapsulation information associated with the second SID;
caching the second SID and the third encapsulation information.

In a possible implementation, the first packet further includes a first SRH including a first segment list used to indicate a forwarding path; after receiving the first packet, the method further includes:
forwarding the first packet on the forwarding path.

In a third aspect, an example of the present disclosure provides a packet processing method, which is applied to a first head node and includes:
sending a first packet on a forwarding path indicated by an SRv6 policy;
wherein, the first packet includes a first SID, first encapsulation information, and notification information that includes a first head node address;
the notification information is used to make a data plane of the network device receiving the first packet to send the copied first packet to the control plane of the network device after determining that the first SID is a locally configured proxy SID, and receive the first encapsulation information sent by the control plane, and use the first encapsulation information to update locally cached second encapsulation information.

In a possible implementation, before sending the first packet on the forwarding path indicated by the SRv6, the method further includes:
receiving a first configuration instruction and a second configuration instruction, wherein the first configuration instruction includes the SRv6 policy;
starting a notification function according to the second configuration instruction;
sending the first packet on the forwarding path indicated by the SRv6 policy includes:
   sending the first packet on the forwarding path indicated by the SRv6 policy with the notification function.

In a possible implementation, after receiving the first configuration instruction and the second configuration instruction, the method further includes:
creating a notification instance, and binding the notification instance to the SRv6 policy; wherein, the notification instance includes a head node address, life time, a packet sending time interval, whether the network device responds to a packet and a type of a packet;
determining the type of the first packet and generating the first notification information according to the notification instance;
generating an SRH based on the SRv6 policy;
generating the first packet according to the type of the first packet, wherein the first packet includes the SRH;
sending the first packet on the forwarding path indicated by the SRv6 policy includes:
   sending the first packet on the forwarding path indicated by the SRv6 policy according to the packet sending time interval.

In a possible implementation, the type of the first packet is a specified protocol packet or a BFD packet;
when the type of the first packet is a specified protocol packet, the first packet includes an IPv6 header, a DOH and the SRH; when the type of the first packet is a BFD packet, the first packet includes an IPv6 header, a DOH, the SRH and a BFD payload;
wherein, the DOH carries the notification information; the BFD payload carries BFD information;
   or,
when the type of the first packet is a specified protocol packet, the first packet includes an IPv6 header and the SRH; when the type of the first packet is a BFD packet, the first packet includes an IPv6 header, the SRH and a BFD payload;
wherein, the SRH includes a TLV structure that carries the notification information; the BFD payload carries BFD information.

In a possible implementation, the notification information includes a flags field, a sequence number field, a life time field, and a head node address field;
wherein, the flags field includes 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field includes 16 bits, which are used to carry a sequence number and are used to indicate whether the forwarding path indicated by the SRv6 policy is changed;
the life time field includes 32 bits for carrying life time of the encapsulation information;
the head node address field includes 128 bits for carrying a head node address.

In a possible implementation, after sending the first packet on the forwarding path indicated by the SRv6, the method further includes:
receiving a second packet sent by the network device, wherein the second packet includes a processing result of the control plane of the network device on the first encapsulation information.

In a fourth aspect, an example of the present disclosure provides a packet processing apparatus, which is applied to a control plane of a network device and includes:
a receiving module to receive a first packet sent by a data plane of the network device, wherein the first packet includes a first SID, first encapsulation information, and notification information that includes a first head node address;
a sending module to, if there is a first cache entry associated with the first SID locally and a second head node address included in the first cache entry is the same as the first head node address, send the first SID and the first encapsulation information to the data plane, so that the data plane updates stored second encapsulation information associated with the first SID to the first encapsulation information.

In a possible implementation, the first cache entry further includes third encapsulation information, and the third encapsulation information and the second encapsulation information include same content; the apparatus further includes:
a judging module to determine whether the third encapsulation information is the same as the first encapsulation information;
an update module to update the third encapsulation information to the first encapsulation information if the judgment module determines that the third encapsulation information is different from the first encapsulation information.

In a possible implementation, the sending module is further to:
if there is a first cache entry associated with the first SID locally and the second head node address included in the first cache entry is different from the first head node address, send a network configuration error prompt to a management platform.

In a possible implementation, the notification information further includes first indication information, a first sequence number and first life time;
the apparatus further includes:
a judging module to determine, if a value of the first indication information is a first value, whether there is a first cache entry associated with the first SID locally;
a creating module to create a second cache entry associated with the first SID if the judging module determines that there is no first cache entry associated with the first SID locally, wherein the second cache entry includes the first head node address, the first sequence number, the first life time and the first encapsulation information;
wherein the sending module is further to send the first SID, the first sequence number and the first encapsulation information to the data plane.

In a possible implementation, the first cache entry further includes a timestamp;
the update module is further to:
if the judgment module determines there is a first cache entry associated with the first SID locally, update the timestamp to current time.

In a possible implementation, the first cache entry further includes second life time; the apparatus further includes:
a deletion module to delete the first cache entry if it is determined according to the timestamp of the first cache entry that the first cache entry has not been updated within the second life time;
the sending module is further to send the first SID to the data plane, so that the data plane deletes the encapsulation information associated with the first SID.

In a possible implementation, the apparatus further includes a deletion module;
the judging module is further to determine, if the value of the first indication information is a second value, whether there is a third cache entry associated with the first SID locally, wherein the third cache entry includes third encapsulation information and a third head node address;
the deletion module is to delete the third cache entry if the judging module determines there is a third cache entry associated with the first SID locally and the third head node address is the same as the first head node address;
the sending module is further to send the first SID to the data plane, so that the data plane deletes the encapsulation information associated with the first SID.

In a possible implementation, wherein the notification information further includes second indication information; the sending module is further to:
if a value of the second indication information is a second value, send a second packet to a first head node indicated by the first head node address, wherein the second packet includes a processing result of the control plane on the first encapsulation information.

In a possible implementation, the first packet is a specified protocol packet; or, the first packet is a BFD packet;
the first packet further includes a first DOH that carries the notification information; or, the first packet further includes a first SRH including a first TLV structure that carries the notification information.

In a possible implementation, the notification information includes a flags field, a sequence number field, a life time field, and a head node address field;
wherein, the flags field includes 16 bits, wherein two bits are occupied to carry first indication information and second indication information respectively, and remaining bits are reserved fields;
the sequence number field includes 16 bits for carrying a sequence number;
the life time field includes 32 bits for carrying life time of encapsulation information;
the head node address field includes 128 bits for carrying a head node address.

In a possible implementation, the first packet includes an IPv6 header and an SRH, and the first encapsulation information includes information indicated by the IPv6 header and information indicated by the SRH.

In a fifth aspect, an example of the present disclosure provides a packet processing apparatus, which is applied to a data plane of a network device and includes:
a receiving module to receive a first packet, wherein the first packet includes a first SID, first encapsulation information, and notification information that includes a first head node address;
a sending module to, if the first SID is a locally configured proxy SID, send the copied first packet to a control plane of the network device;
the receiving module is further to receive the first SID and the first encapsulation information sent by the control plane, and use the first encapsulation information to update locally stored second encapsulation information associated with the first SID;
wherein, the first SID and the first encapsulation information are sent by the control plane when determining that there is a first cache entry associated with the first SID locally and a second head node address included in the first cache entry is the same as the first head node address.

In a possible implementation, the notification information further includes a first sequence number;
the sending module is specifically to:
if the first sequence number is different from a second sequence number recorded locally, or the first head node address is different from a second head node address recorded locally, or if there is no encapsulation information associated with the first SID locally, send the copied first packet to the control plane.

In a possible implementation, the apparatus further includes a cache module;
the receiving module is further to receive a second SID cached by the control plane and third encapsulation information associated with the second SID;
the caching module is to cache the second SID and the third encapsulation information.

In a possible implementation, the first packet further includes a first SRH including a first segment list, and the sending module is further to:
forward the first packet on the forwarding path.

In a sixth aspect, an example of the present disclosure provides a packet processing apparatus, which is applied to a first head node and includes:
a sending module to send the first packet on a forwarding path indicated by an SRv6 policy;
wherein, the first packet includes a first SID, first encapsulation information, and notification information that includes a first head node address;
the notification information is used to make a data plane of the network device receiving the first packet to send the copied first packet to the control plane of the network device after determining that the first SID is a locally configured proxy SID, and receive the first encapsulation information sent by the control plane, and use the first encapsulation information to update locally cached second encapsulation information.

In a possible implementation, the apparatus further includes:
a receiving module to receive a first configuration instruction and a second configuration instruction, wherein the first configuration instruction includes the SRv6 policy;
a starting module to start a notification function according to the second configuration instruction;
the sending module is specifically to:
   send the first packet on the forwarding path indicated by the SRv6 policy with the notification function.

In a possible implementation, the apparatus further includes:
a creating module to create a notification instance and bind the notification instance to the SRv6 policy; wherein, the notification instance includes a head node address, life time, a packet sending time interval, whether the network device responds to a packet and a type of a packet;
a generating module to determine the type of the first packet and generate the first notification information according to the notification instance; generate an SRH based on the SRv6 policy; generate the first packet according to the type of the first packet, wherein the first packet includes the SRH;
wherein the sending module is specifically to send the first packet on the forwarding path indicated by the SRv6 policy according to the packet sending time interval.

In a possible implementation, the type of the first packet is a specified protocol packet or a BFD packet;
when the type of the first packet is a specified protocol packet, the first packet includes an IPv6 header, a DOH and the SRH; when the type of the first packet is a BFD packet, the first packet includes an IPv6 header, a DOH, the SRH and a BFD payload;
wherein, the DOH carries the notification information; the BFD payload carries BFD information;
   or,
when the type of the first packet is a specified protocol packet, the first packet includes an IPv6 header, and the SRH; when the type of the first packet is a BFD packet, the first packet includes an IPv6 header, the SRH and a BFD payload;
wherein, the SRH includes a TLV structure that carries the notification information; the BFD payload carries BFD information.

In a possible implementation, the notification information includes a flags field, a sequence number field, a life time field, and a head node address field;
wherein, the flags field includes 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field includes 16 bits, which are used to carry a sequence number and are used to indicate whether the forwarding path indicated by the SRv6 policy is changed;
the life time field includes 32 bits for carrying life time of the encapsulation information;
the head node address field includes 128 bits for carrying a head node address.

In a possible implementation, the receiving module is further to:
receive a second packet sent by the network device, wherein the second packet includes a processing result of the control plane of the network device on the first encapsulation information.

In a seventh aspect, an example of the present disclosure provides a network device, including:
a processor;
a transceiver;
a machine-readable storage medium, which stores machine executable instructions that can be executed by the processor and cause the processor to:
   receive a first packet sent by a data plane of the network device through the transceiver, wherein the first packet includes a first SID, first encapsulation information, and notification information that includes a first head node address;
   if there is a first cache entry associated with the first SID locally and a second head node address included in the first cache entry is the same as the first head node address, send the first SID and the first encapsulation information to the data plane through the transceiver, so that the data plane updates stored second encapsulation information associated with the first SID to the first encapsulation information.

In a possible implementation, the first cache entry further includes third encapsulation information, and the third encapsulation information and the second encapsulation information include same content; the machine executable instructions further cause the processor to:
determine whether the third encapsulation information is the same as the first encapsulation information;
if the third encapsulation information is different from the first encapsulation information, update the third encapsulation information to the first encapsulation information.

In a possible implementation, the machine executable instructions further cause the processor to:
if there is a first cache entry associated with the first SID locally, and the second head node address included in the first cache entry is different from the first head node address, send a network configuration error prompt to a management platform through the transceiver.

In a possible implementation, the notification information further includes first indication information, a first sequence number and first life time;
the machine executable instructions further cause the processor to:
if a value of the first indication information is a first value, determine whether there is a first cache entry associated with the first SID locally;
if there is no first cache entry associated with the first SID locally, create a second cache entry associated with the first SID, wherein the second cache entry includes the first head node address, the first sequence number, the first life time and the first encapsulation information;
send the first SID, the first sequence number and the first encapsulation information to the data plane through the transceiver.

In a possible implementation, the first cache entry further includes a timestamp;
the machine executable instructions further cause the processor to:
if there is a first cache entry associated with the first SID locally, update the timestamp to current time.

In a possible implementation, the first cache entry further includes second life time; the machine executable instructions further cause the processor to:
if it is determined according to the timestamp of the first cache entry that the first cache entry has not been updated within the second life time, delete the first cache entry;
send the first SID to the data plane through the transceiver, so that the data plane deletes the encapsulation information associated with the first SID.

In a possible implementation, the machine executable instructions further cause the processor to:
if the value of the first indication information is a second value, determine whether there is a third cache entry associated with the first SID locally, wherein the third cache entry includes third encapsulation information and a third head node address;
if there is a third cache entry associated with the first SID locally, and the third head node address is the same as the first head node address, delete the third cache entry;
send the first SID to the data plane through the transceiver, so that the data plane deletes the encapsulation information associated with the first SID.

In a possible implementation, the notification information further includes second indication information; the machine executable instructions further cause the processor to:
if a value of the second indication information is a second value, send a second packet to a first head node indicated by the first head node address through the transceiver, wherein the second packet includes a processing result of the control plane on the first encapsulation information.

In a possible implementation, the first packet is a specified protocol packet; or, the first packet is a BFD packet;
the first packet further includes a first DOH that carries the notification information; or, the first packet further includes a first SRH including a first TLV structure that carries the notification information.

In a possible implementation, the notification information includes a flags field, a sequence number field, a life time field, and a head node address field;
wherein, the flags field includes 16 bits, wherein two bits are occupied to carry first indication information and second indication information respectively, and remaining bits are reserved fields;
the sequence number field includes 16 bits for carrying a sequence number;
the life time field includes 32 bits for carrying life time of encapsulation information;
the head node address field includes 128 bits for carrying a head node address.

In a possible implementation, the first packet includes an IPv6 header and an SRH, and the first encapsulation information includes information indicated by the IPv6 header and information indicated by the SRH.

In an eighth aspect, an example of the present disclosure provides a network device, including:
a processor;
a transceiver;
a machine-readable storage medium, which stores machine executable instructions that can be executed by the processor and cause the processor to:
   receive a first packet through the transceiver, wherein the first packet includes a first SID, first encapsulation information, and notification information that includes a first head node address;
   if the first SID is a locally configured proxy SID, send the copied first packet to a control plane of the network device through the transceiver;
   receive the first SID and the first encapsulation information sent by the control plane through the transceiver, and use the first encapsulation information to update locally stored second encapsulation information associated with the first SID;
   wherein, the first SID and the first encapsulation information are sent by the control plane when determining that there is a first cache entry associated with the first SID locally and a second head node address included in the first cache entry is the same as the first head node address.

In a possible implementation, the notification information further includes a first sequence number;
the machine executable instructions further cause the processor to:
if the first sequence number is different from a second sequence number recorded locally, or the first head node address is different from a second head node address recorded locally, or if there is no encapsulation information associated with the first SID locally, send the copied first packet to the control plane through the transceiver.

In a possible implementation, the machine executable instructions further cause the processor to:
receive a second SID cached by the control plane and third encapsulation information associated with the second SID through the transceiver;
cache the second SID and the third encapsulation information.

In a possible implementation, the first packet further includes a first SRH, including a first segment list used to indicate a forwarding path; the machine executable instructions further cause the processor to:
forward the first packet on the forwarding path through the transceiver.

In a ninth aspect, an example of the present disclosure provides a head node including:
a processor;
a transceiver;
a machine-readable storage medium, which stores machine executable instructions that can be executed by the processor and cause the processor to:
   send the first packet on a forwarding path indicated by an SRv6 policy through the transceiver;
   wherein, the first packet includes a first SID, first encapsulation information, and notification information that includes a first head node address;
   the notification information is used to make a data plane of the network device receiving the first packet to send the copied first packet to the control plane of the network device after determining that the first SID is a locally configured proxy SID, and receive the first encapsulation information sent by the control plane, and use the first encapsulation information to update locally cached second encapsulation information.

In a possible implementation, the machine executable instructions further cause the processor to:
receive a first configuration instruction and a second configuration instruction through the transceiver, wherein the first configuration instruction includes the SRv6 policy;
start a notification function according to the second configuration instruction;
send the first packet on the forwarding path indicated by the SRv6 policy with the notification function through the transceiver.

In a possible implementation, the machine executable instructions further cause the processor to:
create a notification instance and bind the notification instance to the SRv6 policy; wherein, the notification instance includes a head node address, life time, a packet sending time interval, whether the network device responds to a packet and a type of a packet;
determine the type of the first packet and generate the first notification information according to the notification instance;
generate an SRH based on the SRv6 policy;
generate the first packet according to the type of the first packet, wherein the first packet includes the SRH;
send the first packet on the forwarding path indicated by the SRv6 policy according to the packet sending time interval through the transceiver.

In a possible implementation, the type of the first packet is a specified protocol packet or a BFD packet;
when the type of the first packet is a specified protocol packet, the first packet includes an IPv6 header, a DOH and the SRH; when the type of the first packet is a BFD packet, the first packet includes an IPv6 header, a DOH, the SRH and a BFD payload;
wherein, the DOH carries the notification information; the BFD payload carries BFD information;
   or,
when the type of the first packet is a specified protocol packet, the first packet includes an IPv6 header, and the SRH; when the type of the first packet is a BFD packet, the first packet includes an IPv6 header, the SRH and a BFD payload;
wherein, the SRH includes a TLV structure that carries the notification information; the BFD payload carries BFD information.

In a possible implementation, the notification information includes a flags field, a sequence number field, a life time field, and a head node address field;
wherein, the flags field includes 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field includes 16 bits, which are used to carry a sequence number and are used to indicate whether the forwarding path indicated by the SRv6 policy is changed;
the life time field includes 32 bits for carrying life time of the encapsulation information;
the head node address field includes 128 bits for carrying a head node address.

In a possible implementation, the machine executable instructions further cause the processor to:
receive a second packet sent by the network device through the transceiver, wherein the second packet includes a processing result of the control plane of the network device on the first encapsulation information.

In a tenth aspect, an example of the present disclosure provides a machine-readable storage medium storing machine executable instructions that, when invoked and executed by a processor, cause the processor to implement the method of any one of the above first, second, or third aspect.

In an eleventh aspect, an example of the present disclosure provides a computer program product, which causes a processor to perform the method of any one of the above first, second, or third aspect.

With the technical solution of the present disclosure, after receiving a first packet sent by a data plane of a network device, wherein the first packet includes a first SID, first encapsulation information, and notification information that includes a first head node address, if determining that there is a first cache entry associated with the first SID locally and the second head node address included in the first cache entry is the same as the first head node address, the control plane of the network device can send the first encapsulation information to the data plane, so that the data plane updates the second encapsulation information to the first encapsulation information. It can be seen that in the example of the present disclosure, the control plane is used to learn the encapsulation information, which can reduce the requirements on the data plane and improve the applicability. Further, only in the case that the control plane determines that the first head node address is the same as the second head node address, the data plane is triggered to update the encapsulation information, which can prevent the data plane from learning wrong encapsulation information, thereby avoiding the problem that the subsequent forwarding path of the service packet processed by the SF node is not clear and may be a wrong path.

### Brief Description of the Drawings

In order to more clearly describe the technical solution of the examples of the application and the prior art, drawings needed in the examples and the prior art will be briefly described below. Obviously, the drawings described below are for only some examples of the present disclosure, one of ordinary skills in the art can also obtain other drawings based on these drawings without any creative efforts.
FIG. 1 is a schematic diagram of a scenario with a combination of a service chain function and SRv6 according to an example of the present disclosure;
FIG. 2 is a schematic flowchart of a packet processing method according to an example of the present disclosure;
FIG. 3 is a schematic diagram of a format of a first packet according to an example of the present disclosure;
FIG. 4 is another schematic diagram of a format of a first packet according to an example of the present disclosure;
FIG. 5 is a schematic diagram of a format of notification information according to an example of the present disclosure;
FIG. 6 is a schematic flowchart of another packet processing method according to an example of the present disclosure;
FIG. 7 is a schematic flowchart of another packet processing method according to an example of the present disclosure;
FIG. 8 is a schematic structural diagram of a packet processing apparatus according to an example of the present disclosure;
FIG. 9 is a schematic structural diagram of another packet processing apparatus according to an example of the present disclosure;
FIG. 10 is a schematic structural diagram of a network device according to an example of the present disclosure;
FIG. 11 is a schematic structural diagram of another network device according to an example of the present disclosure;
FIG. 12 is a schematic structure diagram of a head node according to an example of the present disclosure.

### Detailed Description

In order to make objectives, technical solutions and advantages of the present disclosure more apparent, the present disclosure now will be described in detail with reference to the accompanying drawings and the detailed description. Obviously, the examples described are only some examples of the present disclosure instead of all the examples. All further examples obtained by those of ordinary skills in the art based on the examples herein without any creative efforts are within the scope of the present disclosure.

For ease of understanding, the related concepts involved in the examples of the present disclosure are first introduced.

SRv6 is a source routing technology. The head node of an SRv6 network can add SRH encapsulation to traffic, and guide the traffic to be forwarded according to a specified path through an Segment List in the SRH header.

The service chain function means that in the process of traffic forwarding, the Service Function Forwarder (SFF) node sends traffic to the Service Function (SF) node in a planned order, so that the SF node processes the traffic, the SF node can specifically implement the billing function, the firewall function, and so on.

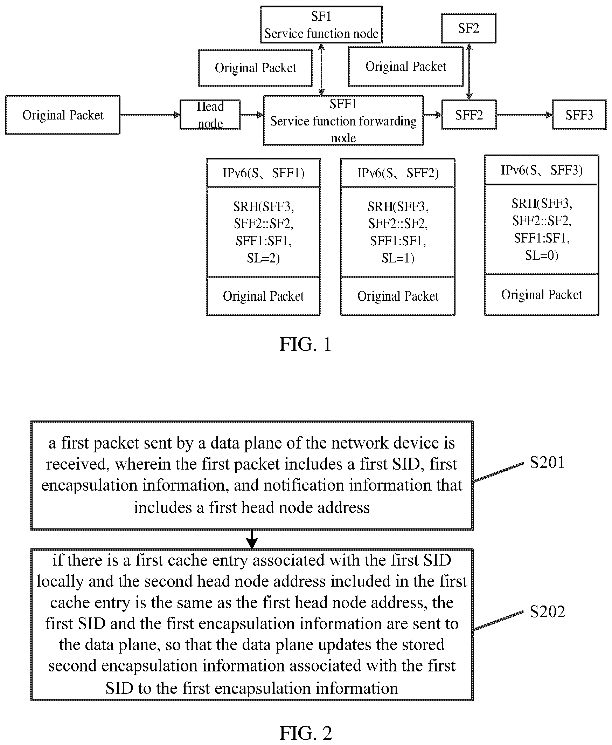

At present, the service chain function can be combined with SRv6, that is, the service chain function can be implemented in the SRv6 network, and the service chain can be arranged through the Segment List of SRv6. As shown in FIG. 1, after receiving an original packet, the head node (that is, the Classifier in the scenario of the service chain function) encapsulates the Internet Protocol Version 6 (IPv6) header and SRH on the outer layer of the original packet.

The source address of the IPv6 header is the source address of the original service packet, and the destination address thereof is SFF1.

The segment lists included in the SRH are SFF1::SF1, SFF2::SF2, and SFF3.

Wherein, SFF1::SF1 is a segment ID (SID) of SFF1 whose type may be End.AD, End.AS, or End.AM, and is used to instruct SFF1 to send the packet to SF1.

SFF2::SF2 is the SID of SFF2 whose type may be End.AD, End.AS, or End.AM, and is used to instruct SFF2 to send the packet to SF2.

SFF3 is the SID of SFF3, and the type may be a common End type.

The head node can forward the packet encapsulated with the IPv6 header and SRH to SFF1. If the type of SFF1 is End.AD or End.AS, SFF1 can forward the original packet to SF1. After processing the original packet, SF1 sends the processed original packet to SFF1, and then SFF1 re-encapsulates the IPv6 header and SRH for the processed original packet and sends them to SFF2. The processing of packets by SFF2 is similar to that of SFF1, and is not described in detail here.

The above End.AD is an SRv6 SID, which is used to indicate that the node to which End.AD belongs, as an SR proxy (Segment Routing Proxy), deletes the IPv6 header and SRH from the packet temporarily before forwarding the packet to a SF node for processing, and then forwards the packet to the SF node. After receiving the packet processed by the SF node, the packet is re-encapsulated with the IPv6 header and the SRH based on the information of the IPv6 header and SRH cached in a dynamic cache. That is to say, the node to which End.AD belongs may act as a dynamic proxy node and maintain a dynamic cache for each service chain in the dynamic cache.

End.AS is another SRv6 SID, which is used to indicate that the node to which End.AS belongs, as an SR proxy, can implement packet processing functions similar to End.AD, which is different from End.AD in that, the node to which End.AS belongs re-encapsulates the IPv6 header and SRH for the packet through static configuration information, and there is no need to maintain the dynamic cache.

End.AM is another SRv6 SID, which is used to indicate that the SFF node to which End.AM belongs, as an SR proxy, can be connected to an SF node with the ability to identify the SRH. Before forwarding the packet to the SF node, the SFF node to which End.AM belongs will update the destination address of the packet to the segment with SL=0, which is a final destination address of the packet, and then after processing the packet, the SF node will return the processed packet to the SFF node based on the destination address, and then the SFF node will update the destination address of the packet to the segment indicated by the current SL in the SRH, so that the packet will continue to be forwarded along the path indicated by the Segment List.

The above-mentioned End.AD type SFF needs to learn the encapsulation information of the packet on the data plane, and cache the encapsulation information of the packet locally. The learning process imposes high requirements on the data plane and is not practical. In addition, if there is a misconfiguration in the network, for example, on two different head nodes, there are segment lists composed of two different paths but including the same End.AD SID of the same SFF. The head nodes encapsulate the packets respectively according to the two segment lists including the same End.AD SID, that is, when the packets reach the same SFF node, the destination addresses of the packets are the same End.AD SID. In this way, the encapsulation information cached by the SFF node will overlap each other due to two different service flows, and the subsequent forwarding path of the service packet processed by the SF node is unclear and may be an incorrect path.

In order to solve the above technical problem, an example of the present disclosure provides a packet processing method, which is applied to a control plane of a network device, as shown in FIG. 2. The method includes the following blocks.

At S201, a first packet sent by a data plane of the network device is received, wherein the first packet includes a first SID, first encapsulation information, and notification information that includes a first head node address.

Wherein, the first SID is the destination address in the IPv6 header of the first packet.

At S202, if there is a first cache entry associated with the first SID locally and the second head node address included in the first cache entry is the same as the first head node address, the first SID and the first encapsulation information are sent to the data plane, so that the data plane updates the stored second encapsulation information associated with the first SID to the first encapsulation information.

With the examples of the present disclosure, after receiving a first packet sent by a data plane of the network device, wherein the first packet includes a first SID, first encapsulation information, and notification information that includes a first head node address, if determining that there is a first cache entry associated with the first SID locally and the second head node address included in the first cache entry is the same as the first head node address, the control plane of the network device can send the first encapsulation information to the data plane, so that the data plane updates the second encapsulation information to the first encapsulation information. It can be seen that in the example of the present disclosure, the control plane is used to learn the encapsulation information, which can reduce the requirements on the data plane and improve the applicability, and only in the case that the control plane determines that the first head node address is the same as the second head node address, the data plane is triggered to update the encapsulation information, which can prevent the data plane from learning wrong encapsulation information, thereby avoiding the problem that the subsequent forwarding path of the service packet processed by the SF node is not clear and may be a wrong path.

In an example, after S201, the method further includes: if there is a first cache entry associated with the first SID locally and the second head node address included in the first cache entry is different from the first head node address, sending a network configuration error prompt to a management platform. In addition, the network device may also discard the first packet.

Wherein, the control plane can generate and send syslog logs to a management platform for current network configuration error prompt. The administrator can check the current network configuration according to the syslog logs. Alternatively, the network configuration error prompt can be implemented through other mechanisms. In this way, it can be avoided that the network device learns wrong encapsulation information due to network configuration errors.

In this example of the present disclosure, the first packet includes an IPv6 header and an SRH, and the first encapsulation information includes information indicated by the IPv6 header and information indicated by the SRH.

The first packet in the example of the present disclosure is a specified protocol packet; or, the first packet is a BFD packet.

The first packet further includes a first DOH which carries the notification information; or, the first packet further includes a first SRH including a first TLV structure that carries the notification information.

In an example, the first DOH may be a newly defined DOH extension header (which may be called SRv6-SFC-Advertising Option), and the first DOH is encapsulated in the outer layer of the SRH, that is, the first DOH needs to be processed by each of endpoint nodes indicated by the segment list included in the SRH.

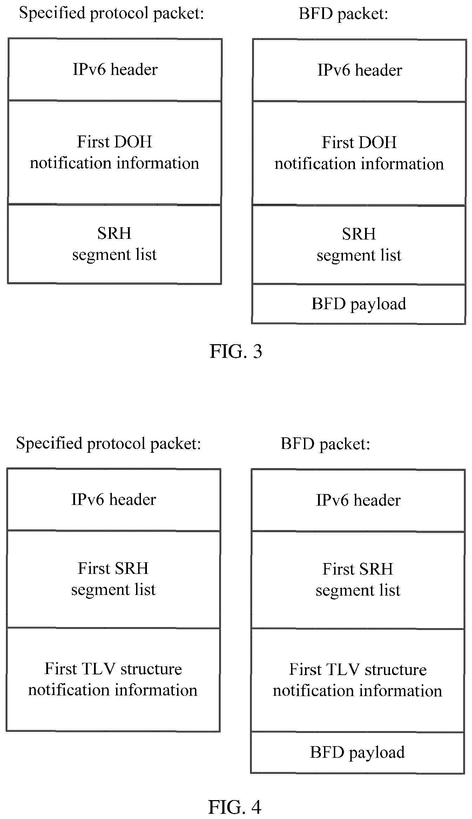

As shown in FIG. 3, when the first packet is a specified protocol packet, the specified protocol packet includes an IPv6 header, a first DOH and an SRH. Wherein, the first DOH carries notification information, and the SRH carries a segment list.

When the first packet is a BFD packet, the BFD packet includes an IPv6 header, a first DOH, an SRH, and a BFD payload. Wherein, the first DOH carries notification information, and the SRH carries a segment list, and the BFD payload carries BFD information.

Wherein, the IPv6 header and the SRH are set according to existing SRv6 related protocols, the first DOH is set according to existing DOH related protocols, and each header includes a Next Header field for indicating the next adjacent header.

As shown in FIG. 4, when the first packet is a specified protocol packet, the specified protocol packet includes an IPv6 header, and a first SRH that includes a first TLV structure. Wherein, the first SRH also carries a segment list, and the first TLV structure carries notification information.

When the first packet is a BFD packet, the BFD packet includes an IPv6 header, a first SRH, and a BFD payload. Wherein, the first SRH includes a TLV structure and also carries a segment list, the first TLV structure carries notification information, and the BFD payload carries BFD information.

Wherein, other fields of the first SRH and the IPv6 header are set according to existing SRv6 related protocols; and each header includes a Next Header field for indicating the next adjacent header.

In this example of the present disclosure, the first encapsulation information includes information indicated by the IPv6 header and information indicated by the SRH. Wherein, the information indicated by the IPv6 header includes but is not limited to field contents such as source and destination addresses, Hoplimit, and FlowLabel, etc. The information indicated by the SRH includes but is not limited to field contents such as a segment list, segment left, Last Entry, and Flags, etc.

The notification information is described below.

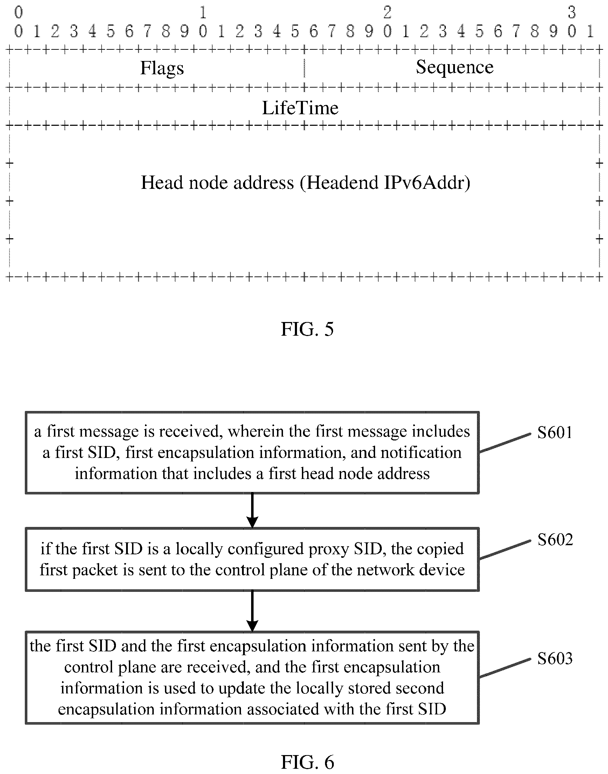

As shown in FIG. 5, FIG. 5 is a schematic diagram of a format of a notification information according to an example of the present disclosure.

The notification information includes a flags (Flags) field, a sequence number (Sequence) field, a life time (LifeTime) field and a head node address (Headend IPv6Addr) field.
wherein, the flags field includes 16 bits, wherein two bits are occupied to carry first indication information (Bit 0) and second indication information (Bit 1) respectively, and the remaining bits are reserved fields to be defined.
Wherein, if BitO is set, that is, the value is 1, it indicates a delete operation;
if BitO is not set, that is, the value is 0, it indicates an update operation;
if Bit1 is set, that is, the value is 1, it indicates that a response packet needs to be returned to the head node.

The sequence number field includes 16 bits for carrying a sequence number. When the head node sends the packet carrying the notification information, if the path information indicated by the SRv6 policy changes, the value of the sequence number field increases.

The life time field includes 32 bits for carrying life time of encapsulation information.

LifeTime is second life time described above, in seconds or milliseconds.

The head node address (Headend IPv6Addr) field includes 128 bits for carrying a head node address.

In the example of the present disclosure, after receiving the first packet, the data plane of the network device obtains the first SID from the destination address field of the IPv6 header, and the type of the first SID may be End.AD.

The data plane identifies whether the first SID is a locally configured SID, and if so, identifies whether the first packet includes notification information, and if the notification information is included, copies the first packet and sends the copied first packet to the control plane. At the same time, the data plane also forwards the first packet according to a forwarding mode specified by the existing SRv6 protocol.

In this example of the present disclosure, the first cache entry further includes third encapsulation information, and the third encapsulation information and the second encapsulation information include the same content. That is, after having learned the encapsulation information according to the received packet, the control plane sends the learned encapsulation information to the data plane, so that the content of the encapsulation information stored in the control plane and the data plane is the same.

Before the control plane sends the first encapsulation information to the data plane, the method further includes: determining whether the third encapsulation information is the same as the first encapsulation information;
if they are different, updating the third encapsulation information to the first encapsulation information, and performing the above S202 of sending the first SID and the first encapsulation information to the data plane.

Wherein, if the control plane determines that the second head node address included in the first cache entry is the same as the first head node address, and the third encapsulation information is different from the first encapsulation information, it means that the path information indicated by the SRv6 policy of the head node has changed. Therefore, the control plane can update the third encapsulation information in the first cache entry to the first encapsulation information, and send the first SID and the first encapsulation information to the data plane.

In one implementation, the control plane may determine whether the third encapsulation information is the same as the first encapsulation information by comparing the contents of the third encapsulation information and the first encapsulation information.

In another implementation, the control plane may also compare the sequence number cached in the first cache entry and the sequence number included in the notification information to determine whether they are the same, and if they are different, it can be determined that the third encapsulation information is different from the first encapsulation information.

In another example of the present disclosure, the notification information further includes first indication information, a first sequence number, and first life time. After the above S201 of receiving the first packet sent by the data plane of the network device, the method further includes:
if the value of the first indication information is a first value (0), determining whether there is a first cache entry associated with the first SID locally, wherein the first indication information is BitO in the Flags field in FIG. 5, if BitO is not set, it indicates an update operation;
if there is no first cache entry associated with the first SID locally, creating a second cache entry associated with the first SID, wherein the second cache entry includes the first head node address, the first sequence number, the first life time and the first encapsulation information; and sending the first SID, the first sequence number and the first encapsulation information to the data plane;
If there is a first cache entry associated with the first SID locally, updating the timestamp included in the first cache entry to current time, and performing the method for updating the third encapsulation information and the second encapsulation information introduced in the above example.

Wherein, the first cache entry further includes second life time, which is obtained by the control plane from the notification information of the received historical packet, that is, the value of the LifeTime field included in the notification information.

The first cache entry has an aging mechanism. If it is determined according to the timestamp of the first cache entry that the first cache entry has not been updated within the second life time, the first cache entry is deleted and the first SID is sent to the data plane, so that the data plane deletes the encapsulation information associated with the first SID.

Wherein, the timestamp included in the first cache entry has not been updated within the second life time, which indicates that the network device has not received within the second life time a packet carrying the notification information sent by the head node, then the control plane can delete the first cache entry and send the first SID to the data plane, so that the data plane deletes the encapsulation information associated with the first SID. In this way, the storage space of the control plane and the data plane will not be occupied by the first cache entry after aging, thereby saving the storage space.

The above-mentioned example introduces the update operation on the encapsulation information. In another case, the head node may also actively withdraw the encapsulation information that has been learned by the network device.

In an example, after receiving the first packet sent by the data plane of the network device at S201, the method further includes:
if the value of the first indication information is a second value (1), determining whether there is a third cache entry associated with the first SID locally, wherein the third cache entry includes third encapsulation information and a third head node address; the first indication information is BitO in the Flags field in FIG. 5, if BitO is set, it indicates a delete operation.
If there is a third cache entry associated with the first SID locally, and the third head node address is the same as the first head node address, the third cache entry is deleted and the first SID is sent to the data plane, so that the data plane deletes the encapsulation information associated with the first SID. In an example, if the third head node address is different from that of the first head node, the first packet may be discarded.

The head node can control the control plane and data plane of the network device to delete the third encapsulation information through the notification information, that is, the head node can flexibly control the deletion of the encapsulation information, and the service chain path can be quickly updated after the change, and it can be avoided that the control plane and the data plane of the network device store the encapsulation information that has not been used, which further prevents the network device from performing wrong encapsulation on the packet processed by the SF node.

In another example of the present disclosure, the above notification information further includes second indication information. If the value of the second indication information is the second value (that is, Bit1 in the Flags field in FIG. 5 is set), a second packet is sent to the first head node indicated by the first head node address, wherein the second packet includes a processing result of the control plane on the first encapsulation information.

In an example, the control plane may send the second packet to the first head node after determining that the control plane and the data plane successfully learn the encapsulation information carried in the first packet. In this case, the processing result is that the learning is successful.

Alternatively, the control plane may also send the second packet to the first head node after determining that the control plane and the data plane delete the locally stored encapsulation information. In this case, the processing result is that the deletion is successful.

The control plane sends the processing result of the control plane on the encapsulation information to the first head node, which enables the head node to obtain the state of the network device learning the encapsulation information in time.

An example of the present disclosure further provides a packet processing method, which is applied to a control plane of a network device, as shown in FIG. 6. The method includes the following blocks.

At S601, a first packet is received, wherein the first packet includes a first SID, first encapsulation information, and notification information that includes a first head node address.

Regarding the content included in the first packet, references can be made to the relevant description in the above examples, which are not repeated here.

At S602, if the first SID is a locally configured proxy SID, the copied first packet is sent to the control plane of the network device.

In this example of the present disclosure, the first packet further includes a first SRH, which includes a first segment list used to indicate a forwarding path. After receiving the first packet, the control plane may copy the first packet, send the copied first packet to the control plane, and continue to forward the first packet on the forwarding path.

At S603, the first SID and the first encapsulation information sent by the control plane are received, and the first encapsulation information is used to update the locally stored second encapsulation information associated with the first SID.
wherein, the first SID and the first encapsulation information are sent by the control plane when determining that there is a first cache entry associated with the first SID locally and the second head node address included in the first cache entry is the same as the first head node address.

With the examples of the present disclosure, the control plane of the network device can receive a first packet, wherein the first packet includes a first SID, first encapsulation information, and notification information that includes a first head node address. If the first SID is a locally configured proxy SID, the copied first packet is sent to the control plane, so that after receiving the first packet, if it is determined that there is a first cache entry associated with the first SID locally and the second head node address included in the first cache entry is the same as the first head node address, the control plane sends the first encapsulation information to the data plane so that the data plane uses the first encapsulation information to update the locally stored second encapsulation information associated with the first SID. It can be seen that in this example of the present disclosure, the data plane sends the copied first packet to the control plane so that the control plane learns the encapsulation information, which can reduce requirements on the data plane and improve applicability. The first SID and the first encapsulation information are sent by the control plane when determining that there is a first cache entry associated with the first SID locally and the second head node address included in the first cache entry is the same as the first head node address, which can prevent the data plane from learning the wrong encapsulation information, so as to avoid the problem that the forwarding path of the service packet processed by the SF node is unclear and may be a wrong path.

In another example of the present disclosure, in order to prevent the data plane from repeatedly sending packets with same encapsulation information to the control plane, the notification information included in the first packet further includes a first sequence number, and the data plane also stores a first SID, a second head node address, a second sequence number and second encapsulation information correspondingly.

The above S602 of sending the copied first packet to the control plane of the network device can be specifically implemented as: if the first sequence number is different from the second sequence number recorded locally, or if the first head node address is different from the second head node address recorded locally, or if there is no encapsulation information associated with the first SID locally, sending the copied first packet to the control plane.

Wherein, because the sequence number in the notification information will increase with the update of the encapsulation information, if the first sequence number included in the notification information is different from the second sequence number recorded locally, it indicates that the encapsulation information carried in the first packet has changed, then the data plane may send the copied first packet to the control plane, so as to trigger the control plane to learn the updated encapsulation information.

Conversely, if the first sequence number is the same as the second sequence number, the data plane may not send the copied first packet to the control plane, which can prevent protocol packets from being frequently sent to the control plane and affect the processing performance of the CPU.

In an example, if the first sequence number is the same as the second sequence number, the data plane can record the timestamp of the received first packet, so that the control plane can query the timestamp and use the timestamp to update the timestamp in the cache entry, so that the aging operation is performed exactly according to the life time recorded in the cache entry.

If the data plane determines that the first head node address is different from the locally recorded second head node address, the copied first packet needs to be reported to the control plane, so that the control plane sends a network configuration error prompt to the management platform, thereby avoiding the control plane and the data plane from using the wrong encapsulation information.

If the encapsulation information associated with the first SID does not exist locally on the data plane, the copied first packet needs to be reported to the control plane, which then learns the encapsulation information associated with the first SID, and triggers the data plane to learn the encapsulation information associated with the first SID so that the data plane can subsequently encapsulate the packet processed by the SF node based on the learned encapsulation information so that the packet processed by the SF node is correctly forwarded.

In the example of the present disclosure, the data plane may further receive the second SID cached by the control plane and the third encapsulation information associated with the second SID, and cache the second SID and the third encapsulation information.

If the data plane receives a packet carrying the second SID and the third encapsulation information and there is no third encapsulation information associated with the second SID locally, the packet is copied and the copied packet is sent to the control plane. If the control plane determines that the cache entry corresponding to the second SID is not stored locally, it will cache third encapsulation information corresponding to the second SID, and send the second SID and the third encapsulation information to the data plane, so that the data plane can store the second SID and the third encapsulation information.

An example of the present disclosure also provides a packet processing method, which is applied to a first head node. The method includes: sending a first packet on a forwarding path indicated by an SRv6 policy, wherein the first packet includes a first SID, first encapsulation information, and notification information that includes a first head node address.

The notification information is used to make the data plane of the network device receiving the first packet to send the copied first packet to the control plane of the network device after determining that the first SID is a locally configured proxy SID, and receive the first encapsulation information sent by the control plane, and use the first encapsulation information to update the locally cached second encapsulation information.

Regarding the content included in the first packet, references can be made to the relevant description in the above examples, which are not repeated here.

Using the example of the present disclosure, the first head node sends a first packet on the forwarding path indicated by the SRv6 policy, wherein the first packet includes a first SID, first encapsulation information, and notification information that includes a first head node address, wherein the notification information is used to make the data plane of the network device that receives the first packet to send the copied first packet to the control plane of the network device after determining that the first SID is a locally configured proxy SID, and receive the first encapsulation information sent by the control plane, and use the first encapsulation information to update the locally cached second encapsulation information. It can be seen that in this example of the present disclosure, the data plane sends the copied first packet to the control plane so that the control plane learns the encapsulation information according to the notification information sent by the first head node, which can reduce requirements on the data plane and improve applicability. The data plane receives the first encapsulation information sent by the control plane, and uses the first encapsulation information to update the locally cached second encapsulation information, which can prevent the data plane from learning wrong encapsulation information, so as to avoid the problem that the forwarding path of the service packet processed by the SF node is unclear and may be a wrong path.

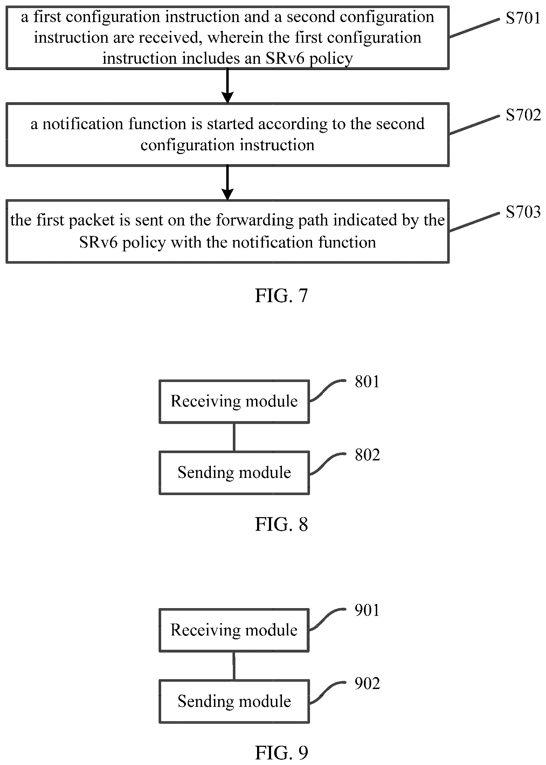

In another example of the present disclosure, before sending the first packet on the forwarding path indicated by the SRv6 policy, it may also be pre-configured. As shown in FIG. 7, the method includes the following blocks.

At S701, a first configuration instruction and a second configuration instruction are received, wherein the first configuration instruction includes an SRv6 policy.

Wherein, the SRv6 policy includes a forwarding path indicated by a segment list, and at least one SID in the segment list is a segment of the End.AD type.

The first configuration instruction and the second configuration instruction may be issued by a controller, or may be issued by a command line.

At S702, a notification function is started according to the second configuration instruction.

In an example, after receiving the first configuration instruction and the second configuration instruction, the head node may create a notification instance, and bind the notification instance with the SRv6 policy.

Then, the type of the first packet can be determined and the first notification information can be generated according to the notification instance. Based on the SRv6 policy, the SRH can be generated according to the SRv6 related protocol, and then the first packet can be generated according to the type of the first packet, and the first packet includes the SRH.

The notification instance includes a head node address, life time, a packet sending time interval, whether the network device responds to a packet and the type of a packet.

Wherein, if the notification instance is not configured with a head node address, the head node uses the IPv6 source address by default when adding SRv6 encapsulation to the packet.

The packet sending time interval is a time interval at which the head node sends the packet with the notification information, and the unit can be seconds.

The life time is LifeTime introduced in the above example, In an example, the value of LifeTime may be three times larger than the packet sending time interval.

The type of a packet can be a specified protocol packet or a BFD packet.

At S703, the first packet is sent on the forwarding path indicated by the SRv6 policy with the notification function.

In an example, the head node may send the first packet on the forwarding path indicated by the SRv6 policy according to the packet sending time interval included in the notification instance.

In addition, because the tail node of the forwarding path will not be the SFF node at the same time, it is not necessary to process the notification information. After receiving the first packet of the specified protocol, the tail node can discard the first packet to avoid the tail node from forwarding the first packet of the specified protocol outside an SRv6 domain.

In an example, the first head node may also receive a second packet sent by the network device, wherein the second packet includes the processing result of the control plane of the network device on the first encapsulation information, so that the head node can determine that the service chain deployment is completed after receiving the processing result indicating the successful encapsulation information learning of all SFF nodes on the forwarding path. Alternatively, the head node may present the processing result for each of SFF nodes on the current service chain path based on the received processing result.

Using the example of the present disclosure, after receiving the first configuration instruction and the second configuration instruction, the head node starts the notification function, and sends the first packet on the forwarding path indicated by the SRv6 policy, so that after determining that the first SID is a locally configured proxy SID, the data plane of the network device sends the copied first packet to the control plane of the network device, receives the first encapsulation information sent by the control plane, and uses the first encapsulation information to update the locally cached second encapsulation information, so that the control plane learns the encapsulation information, which can reduce the complexity of the data plane, and increase the fault tolerance, control, and security capabilities, and prevent the data plane from learning wrong encapsulation information, so as to avoid the problem that the forwarding path of the service packet processed by the SF node is unclear and may be a wrong path.

Based on the same inventive concept, an example of the present disclosure provides a packet processing apparatus, which is applied to a control plane of a network device, as shown in FIG. 8. The apparatus includes:
a receiving module 801 to receive a first packet sent by a data plane of the network device, wherein the first packet includes a first SID, first encapsulation information, and notification information that includes a first head node address;
a sending module 802 to, if there is a first cache entry associated with the first SID locally and the second head node address included in the first cache entry is the same as the first head node address, send the first SID and the first encapsulation information to the data plane, so that the data plane updates the stored second encapsulation information associated with the first SID to the first encapsulation information.

In an example, the first cache entry further includes third encapsulation information, and the third encapsulation information and the second encapsulation information include the same content; the apparatus further includes:
a judging module to determine whether the third encapsulation information is the same as the first encapsulation information;
an update module to update the third encapsulation information to the first encapsulation information if the judgment module determines that the third encapsulation information is different from the first encapsulation information.

In an example, the sending module is further to:
if there is a first cache entry associated with the first SID locally, and the second head node address included in the first cache entry is different from the first head node address, send a network configuration error prompt to a management platform.

In an example, the notification information further includes first indication information, a first sequence number, and first life time;
the apparatus further includes:
a judging module to determine, if the value of the first indication information is a first value, whether there is a first cache entry associated with the first SID locally;
a creating module to create a second cache entry associated with the first SID if the judging module determines there is no first cache entry associated with the first SID locally, wherein the second cache entry includes the first head node address, the first sequence number, the first life time and the first encapsulation information;
wherein the sending module 802 is further to send the first SID, the first sequence number and the first encapsulation information to the data plane.

In an example, the first cache entry further includes a timestamp;
the update module is further to:
if the judgment module determines there is a first cache entry associated with the first SID locally, update the timestamp to current time.

In an example, the first cache entry further includes second life time; the apparatus further includes:
a deletion module to delete the first cache entry if it is determined according to the timestamp of the first cache entry that the first cache entry has not been updated within the second life time;
wherein the sending module 802 is further to send the first SID to the data plane, so that the data plane deletes the encapsulation information associated with the first SID.

In an example, the apparatus further includes: a deletion module;
the judging module is further to determine, if the value of the first indication information is a second value, whether there is a third cache entry associated with the first SID locally, wherein the third cache entry includes third encapsulation information and a third head node address;
the deletion module is to delete the third cache entry if the judging module determines there is a third cache entry associated with the first SID locally and the third head node address is the same as the first head node address;
the sending module 802 is further to send the first SID to the data plane, so that the data plane deletes the encapsulation information associated with the first SID.

In an example, the notification information further includes second indication information; the sending module 802 is further to:
if the value of the second indication information is a second value, send a second packet to the first head node indicated by the first head node address, wherein the second packet includes a processing result of the control plane on the first encapsulation information.

In an example, the first packet is a specified protocol packet; or, the first packet is a BFD packet;
the first packet further includes a first DOH that carries the notification information; or, the first packet further includes a first SRH including a first TLV structure that carries the notification information.

In an example, the notification information includes a flags field, a sequence number field, a life time field, and a head node address field;
wherein, the flags field includes 16 bits, wherein two bits are occupied to carry the first indication information and the second indication information respectively, and the remaining bits are reserved fields;
the sequence number field includes 16 bits for carrying a sequence number;
the life time field includes 32 bits for carrying life time of the encapsulation information;
the head node address field includes 128 bits for carrying a head node address.

In an example, the first packet includes an IPv6 header and an SRH, and the first encapsulation information includes information indicated by the IPv6 header and information indicated by the SRH.

An example of the present disclosure further provides a packet processing apparatus, which is applied to a data plane of a network device, as shown in FIG. 9. The apparatus includes:
a receiving module 901 to receive a first packet, wherein the first packet includes a first SID, first encapsulation information, and notification information that includes a first head node address;
a sending module 902 to, if the first SID is a locally configured proxy SID, send the copied first packet to the control plane of the network device;
wherein the receiving module 901 is further to receive the first SID and the first encapsulation information sent by the control plane, and use the first encapsulation information to update the locally stored second encapsulation information associated with the first SID;
wherein, the first SID and the first encapsulation information are sent by the control plane when determining that there is a first cache entry associated with the first SID locally and the second head node address included in the first cache entry is the same as the first head node address.

In an example, the notification information further includes a first sequence number;
the sending module 902 is specifically to:
if the first sequence number is different from the second sequence number recorded locally, or the first head node address is different from the second head node address recorded locally, or if there is no encapsulation information associated with the first SID locally, send the copied first packet to the control plane.

In an example, the apparatus further includes: a cache module;
wherein the receiving module 901 is further to receive a second SID cached by the control plane and third encapsulation information associated with the second SID;
the caching module is to cache the second SID and the third encapsulation information.

In an example, the first packet further includes a first SRH, which includes a first segment list, and the sending module is further to:
forward the first packet on the forwarding path.

An example of the present disclosure provides a packet processing apparatus, which is applied to a first head node. The apparatus includes:
a sending module to send the first packet on the forwarding path indicated by an SRv6 policy;
wherein, the first packet includes a first SID, first encapsulation information, and notification information that includes the first head node address;

The notification information is used to make the data plane of the network device receiving the first packet to send the copied first packet to the control plane of the network device after determining that the first SID is a locally configured proxy SID, and receive the first encapsulation information sent by the control plane, and use the first encapsulation information to update the locally cached second encapsulation information.

In an example, the apparatus further includes:
a receiving module to receive a first configuration instruction and a second configuration instruction, wherein the first configuration instruction includes the SRv6 policy;
a starting module to start a notification function according to the second configuration instruction;
the sending module is specifically to:
   send the first packet on the forwarding path indicated by the SRv6 policy with the notification function.

In an example, the apparatus further includes:
a creating module to create a notification instance, and bind the notification instance to the SRv6 policy; wherein the notification instance includes a head node address, life time, a packet sending time interval, whether the network device responds to a packet and a type of a packet;
a generating module to:
   determine the type of the first packet and generate the first notification information according to the notification instance;
   generate an SRH based on the SRv6 policy;
   generate the first packet according to the type of the first packet, wherein the first packet includes the SRH;
   the sending module is specifically to:
      send the first packet on the forwarding path indicated by the SRv6 policy according to the packet sending time interval.

In an example, the type of the first packet is a specified protocol packet or a BFD packet;
when the type of the first packet is a specified protocol packet, the first packet includes an IPv6 header, a DOH and the SRH; when the type of the first packet is a BFD packet, the first packet includes an IPv6 header, a DOH, the SRH and a BFD payload;
wherein, the DOH carries the notification information; the BFD payload carries BFD information;
   or,
when the type of the first packet is a specified protocol packet, the first packet includes an IPv6 header, and the SRH; when the type of the first packet is a BFD packet, the first packet includes an IPv6 header, the SRH and a BFD payload;
wherein, the SRH includes a TLV structure that carries the notification information; the BFD payload carries BFD information.

In an example, the notification information includes a flags field, a sequence number field, a life time field, and a head node address field;
wherein, the flags field includes 16 bits, wherein two bits are occupied to carry first indication information and second indication information respectively, and the remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field includes 16 bits, which are used to carry a sequence number and are used to indicate whether the forwarding path indicated by the SRv6 policy is changed;
the life time field includes 32 bits for carrying life time of the encapsulation information;
the head node address field includes 128 bits for carrying a head node address.

In an example, the receiving module is further to:
receive a second packet sent by the network device, wherein the second packet includes a processing result of the control plane of the network device on the first encapsulation information.

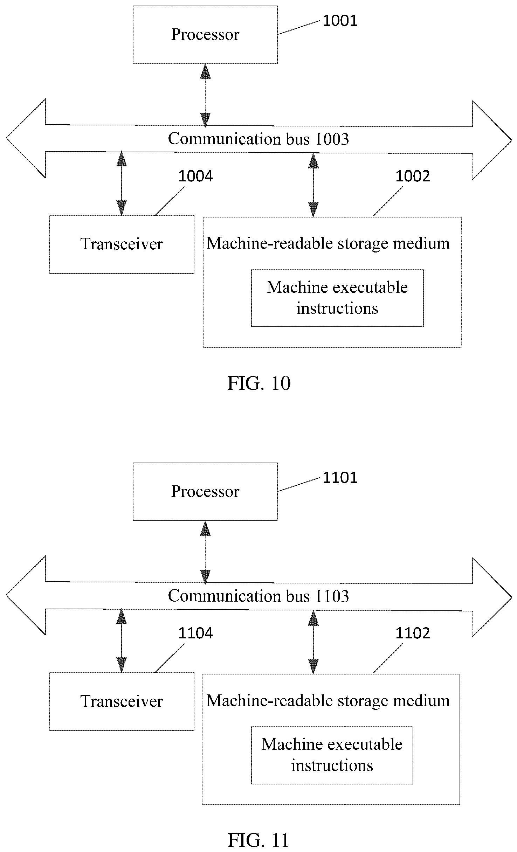

An example of the present disclosure provides a network device, as shown in FIG. 10. The network device includes:
a processor 1001; a transceiver 1004; a communication bus 1003;
a machine-readable storage medium 1002, which stores machine executable instructions that can be executed by the processor 1001 and cause the processor 1001 to:
   receive a first packet sent by a data plane of the network device through the transceiver 1004, wherein the first packet includes a first SID, first encapsulation information, and notification information that includes a first head node address;
   if there is a first cache entry associated with the first SID locally and a second head node address included in the first cache entry is the same as the first head node address, send the first SID and the first encapsulation information to the data plane through the transceiver 1004, so that the data plane updates the stored second encapsulation information associated with the first SID to the first encapsulation information.

In an example, the first cache entry further includes third encapsulation information, and the third encapsulation information and the second encapsulation information include the same content; the machine executable instructions further cause the processor 1001 to:
determine whether the third encapsulation information is the same as the first encapsulation information;
if the third encapsulation information is different from the first encapsulation information, update the third encapsulation information to the first encapsulation information.

In an example, the machine executable instructions further cause the processor 1001 to:
if there is a first cache entry associated with the first SID locally, and the second head node address included in the first cache entry is different from the first head node address, send a network configuration error prompt to a management platform through the transceiver 1004.

In an example, the notification information further includes first indication information, a first sequence number, and first life time;
the machine executable instructions further cause the processor 1001 to:
if the value of the first indication information is a first value, determine whether there is a first cache entry associated with the first SID locally;
if there is no first cache entry associated with the first SID locally, create a second cache entry associated with the first SID, wherein the second cache entry includes the first head node address, the first sequence number, the first life time and the first encapsulation information;
send the first SID, the first sequence number and the first encapsulation information to the data plane through the transceiver 1004.

In an example, the first cache entry further includes a timestamp;
the machine executable instructions further cause the processor 1001 to:
if there is a first cache entry associated with the first SID locally, update the timestamp to current time.

In an example, the first cache entry further includes second life time; the machine executable instructions further cause the processor 1001 to:
delete the first cache entry if it is determined according to the timestamp of the first cache entry that the first cache entry has not been updated within the second life time;
send the first SID to the data plane through the transceiver 1004, so that the data plane deletes the encapsulation information associated with the first SID.

In an example, the machine executable instructions further cause the processor 1001 to:
if the value of the first indication information is a second value, determine whether there is a third cache entry associated with the first SID locally, wherein the third cache entry includes third encapsulation information and a third head node address;
if there is a third cache entry associated with the first SID locally, and the third head node address is the same as the first head node address, delete the third cache entry;
send the first SID to the data plane through the transceiver 1004, so that the data plane deletes the encapsulation information associated with the first SID.

In an example, the notification information further includes second indication information; the machine executable instructions further cause the processor 1001 to:
if the value of the second indication information is a second value, send a second packet to the first head node indicated by the first head node address through the transceiver 1004, wherein the second packet includes a processing result of the control plane on the first encapsulation information.

In an example, the first packet is a specified protocol packet; or, the first packet is a BFD packet;
the first packet further includes a first DOH that carries the notification information; or, the first packet further includes a first SRH including a first TLV structure that carries the notification information.

In an example, the notification information includes a flags field, a sequence number field, a life time field, and a head node address field;
wherein, the flags field includes 16 bits, wherein two bits are occupied to carry first indication information and second indication information respectively, and the remaining bits are reserved fields;
the sequence number field includes 16 bits for carrying a sequence number;
the life time field includes 32 bits for carrying life time of the encapsulation information;
the head node address field includes 128 bits for carrying a head node address.

In a possible implementation, the first packet includes an IPv6 header and an SRH, and the first encapsulation information includes information indicated by the IPv6 header and information indicated by the SRH.

An example of the present disclosure provides a network device, as shown in FIG. 11. The network device includes:
a processor 1101; a transceiver 1104; a communication bus 1103;
a machine-readable storage medium 1102, which stores machine executable instructions can be executed by the processor 1101 and cause the processor 1101 to:
   receive a first packet through the transceiver 1104, wherein the first packet includes a first SID, first encapsulation information, and notification information that includes a first head node address;
   if the first SID is a locally configured proxy SID, send the copied first packet to the control plane of the network device through the transceiver 1104;
   receive the first SID and the first encapsulation information sent by the control plane through the transceiver 1104, and use the first encapsulation information to update the locally stored second encapsulation information associated with the first SID;
   wherein, the first SID and the first encapsulation information are sent by the control plane when determining that there is a first cache entry associated with the first SID locally and the second head node address included in the first cache entry is the same as the first head node address.

In an example, the notification information further includes a first sequence number;
the machine executable instructions further cause the processor 1101 to:
if the first sequence number is different from the second sequence number recorded locally, or the first head node address is different from the second head node address recorded locally, or if there is no encapsulation information associated with the first SID locally, send the copied first packet to the control plane through the transceiver 1104.

In an example, the machine executable instructions further cause the processor 1101 to
receive a second SID cached by the control plane and third encapsulation information associated with the second SID through the transceiver 1104;
cache the second SID and the third encapsulation information.

In an example, the first packet further includes a first SRH including a first segment list used to indicate a forwarding path; the machine executable instructions further cause the processor 1101 to:
forward the first packet on the forwarding path through the transceiver 1104.

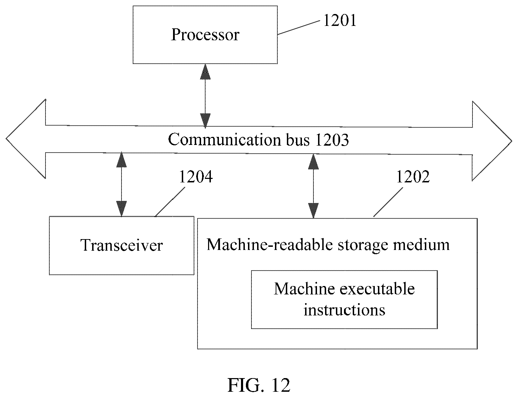

The example of the present disclosure provides a head node, as shown in FIG. 12, the head node includes:
a processor 1201; a transceiver 1204; a communication bus 1203;
a machine-readable storage medium 1202, which stores machine executable instructions that can be executed by the processor 1201 and cause the processor 1201 to:
   send the first packet on the forwarding path indicated by the SRv6 policy through the transceiver 1204;
   wherein the first packet includes a first SID, first encapsulation information, and notification information that includes the first head node address;

The notification information is used to make the data plane of the network device receiving the first packet to send the copied first packet to the control plane of the network device after determining that the first SID is a locally configured proxy SID, and receive the first encapsulation information sent by the control plane, and use the first encapsulation information to update the locally cached second encapsulation information.

In an example, the machine executable instructions further cause the processor 1201 to:
receive a first configuration instruction and a second configuration instruction through the transceiver 1204, wherein the first configuration instruction includes the SRv6 policy;
start a notification function according to the second configuration instruction;
send the first packet on the forwarding path indicated by the SRv6 policy with the notification function through the transceiver 1204.

In an example, the machine executable instructions further cause the processor 1201 to:
create a notification instance, and bind the notification instance to the SRv6 policy; wherein the notification instance includes a head node address, life time, a packet sending time interval, whether the network device responds to a packet and a type of a packet;
determine the type of the first packet and generate the first notification information according to the notification instance;
generate an SRH based on the SRv6 policy;
generate the first packet according to the type of the first packet, wherein the first packet includes the SRH;
send the first packet on the forwarding path indicated by the SRv6 policy according to the packet sending time interval through the transceiver 1204.

In an example, the type of the first packet is a specified protocol packet or a BFD packet;
when the type of the first packet is a specified protocol packet, the first packet includes an IPv6 header, a DOH and the SRH; when the type of the first packet is a BFD packet, the first packet includes an IPv6 header, a DOH, the SRH and a BFD payload;
wherein, the DOH carries the notification information; the BFD payload carries BFD information;
   or,
when the type of the first packet is a specified protocol packet, the first packet includes an IPv6 header, and the SRH; when the type of the first packet is a BFD packet, the first packet includes an IPv6 header, the SRH and a BFD payload;
wherein, the SRH includes a TLV structure that carries the notification information; the BFD payload carries BFD information.

In an example, the notification information includes a flags field, a sequence number field, a life time field, and a head node address field;
wherein, the flags field includes 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field includes 16 bits, which are used to carry a sequence number and are used to indicate whether the forwarding path indicated by the SRv6 policy is changed;
the life time field includes 32 bits for carrying life time of the encapsulation information;
the head node address field includes 128 bits for carrying a head node address.

In an example, the machine executable instructions further cause the processor 1201 to:
receive a second packet sent by the network device through the transceiver 1204, wherein the second packet includes a processing result of the control plane of the network device on the first encapsulation information.

In FIGs 10, 11 and 12, it may further include a communication bus. The processor, the machine-readable storage medium, and the transceiver communicate with each other through the communication bus. The communication bus may be a Peripheral Component Interconnect (PCI) bus or an Extended Industry Standard Architecture (EISA) bus, etc. The communication bus can include an address bus, a data bus, a control bus, or the like.

The transceiver may be a wireless communication module, and the transceiver performs data interaction with other devices under the control of the processor.

The machine-readable storage medium can include a random access memory (RAM), or can include a non-volatile memory (NVM), for example at least one disk memory. In addition, the machine-readable storage medium can also be at least one storage device located away from the processor described above.

The aforementioned processor can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

Based on the same inventive concept, according to the packet processing method provided by the above examples of the present disclosure, the examples of the present disclosure further provide a machine-readable storage medium, which stores machine executable instructions that can be executed by the processor. The processor is caused by the machine executable instructions to implement any of the above packet processing methods.

In yet another example provided by the present disclosure, a computer program product including instructions is also provided, which, when running on a computer, causes the computer to execute any of the above packet processing methods in the foregoing examples.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover a non-exclusive inclusion, so that processes, methods, articles, or devices including a series of elements include not only those elements listed but also those not specifically listed or elements intrinsic to these processes, methods, articles, or equipment. Without further limitations, elements defined by the sentences "include(s) a." or "include(s) a." do not exclude that there are other identical elements in the processes, methods, articles, or devices which include these elements.

The description is made only for preferred examples of the present disclosure, which are not intended to limit the present disclosure. Any modifications, substitutions, improvements, etc., which are made within the spirit and principles of the present disclosure, will fall into the protection scope of the present disclosure.

## Claims

1. A packet processing method, which is applied to a control plane of a network device and comprises:
receiving a first packet sent by a data plane of the network device, wherein the first packet comprises a first SID, first encapsulation information, and notification information that comprises a first head node address;
if there is a first cache entry associated with the first SID locally and a second head node address comprised in the first cache entry is the same as the first head node address, sending the first SID and the first encapsulation information to the data plane, so that the data plane updates stored second encapsulation information associated with the first SID to the first encapsulation information.

2. The method of claim 1, wherein the first cache entry further comprises third encapsulation information, and the third encapsulation information and the second encapsulation information comprise same content; before sending the first encapsulation information to the data plane, the method further comprises:
determining whether the third encapsulation information is the same as the first encapsulation information;
if the third encapsulation information is different from the first encapsulation information, updating the third encapsulation information to the first encapsulation information.

3. The method of claim 1, wherein after receiving the first packet sent by the data plane of the network device, the method further comprises:
if there is a first cache entry associated with the first SID locally and the second head node address comprised in the first cache entry is different from the first head node address, sending a network configuration error prompt to a management platform.

4. The method of claim 1, wherein the notification information further comprises first indication information, a first sequence number and first life time;
after receiving the first packet sent by the data plane of the network device, the method further comprises:
if a value of the first indication information is a first value, determining whether there is a first cache entry associated with the first SID locally;
if there is no first cache entry associated with the first SID locally, creating a second cache entry associated with the first SID, wherein the second cache entry comprises the first head node address, the first sequence number, the first life time and the first encapsulation information;
sending the first SID, the first sequence number and the first encapsulation information to the data plane.

5. The method of claim 4, wherein the first cache entry further comprises a timestamp;
after determining whether there is a first cache entry associated with the first SID locally, the method further comprises:
if there is a first cache entry associated with the first SID locally, updating the timestamp to current time.

6. The method of claim 5, wherein the first cache entry further comprises second life time; the method further comprises:
if it is determined according to the timestamp of the first cache entry that the first cache entry has not been updated within the second life time, deleting the first cache entry;
sending the first SID to the data plane, so that the data plane deletes the encapsulation information associated with the first SID.

7. The method of claim 4, wherein after receiving the first packet sent by the data plane of the network device, the method further comprises:
if the value of the first indication information is a second value, determining whether there is a third cache entry associated with the first SID locally, wherein the third cache entry comprises third encapsulation information and a third head node address;
if there is a third cache entry associated with the first SID locally, and the third head node address is the same as the first head node address, deleting the third cache entry;
sending the first SID to the data plane, so that the data plane deletes the encapsulation information associated with the first SID.

8. The method of any one of claims 1-6, wherein the notification information further comprises second indication information; the method further comprises:
if a value of the second indication information is a second value, sending a second packet to a first head node indicated by the first head node address, wherein the second packet comprises a processing result of the control plane on the first encapsulation information.

9. The method of claim 1, wherein the first packet is a specified protocol packet; or, the first packet is a BFD packet;
the first packet further comprises a first DOH that carries the notification information; or, the first packet further comprises a first SRH comprising a first TLV structure that carries the notification information.

10. The method of claim 1, wherein the notification information comprises a flags field, a sequence number field, a life time field, and a head node address field;
wherein, the flags field comprises 16 bits, wherein two bits are occupied to carry first indication information and second indication information respectively, and remaining bits are reserved fields;
the sequence number field comprises 16 bits for carrying a sequence number;
the life time field comprises 32 bits for carrying life time of encapsulation information;
the head node address field comprises 128 bits for carrying a head node address.

11. The method of claim 1, wherein the first packet comprises an IPv6 header and an SRH, and the first encapsulation information comprises information indicated by the IPv6 header and information indicated by the SRH.

12. A packet processing method, which is applied to a data plane of a network device and comprises:
receiving a first packet, wherein the first packet comprises a first SID, first encapsulation information, and notification information that comprises a first head node address;
if the first SID is a locally configured proxy SID, sending a copied first packet to a control plane of the network device;
receiving the first SID and the first encapsulation information sent by the control plane, and using the first encapsulation information to update locally stored second encapsulation information associated with the first SID;
wherein, the first SID and the first encapsulation information are sent by the control plane when determining that there is a first cache entry associated with the first SID locally and a second head node address comprised in the first cache entry is the same as the first head node address.

13. The method of claim 12, wherein the notification information further comprises a first sequence number;
sending the copied first packet to the control plane of the network device comprises:
if the first sequence number is different from a second sequence number recorded locally, or the first head node address is different from a second head node address recorded locally, or if there is no encapsulation information associated with the first SID locally, sending the copied first packet to the control plane.

14. The method of claim 12 or 13, further comprising:
receiving a second SID cached by the control plane and third encapsulation information associated with the second SID;
caching the second SID and the third encapsulation information.

15. The method of claim 12, wherein the first packet further comprises a first SRH comprising a first segment list used to indicate a forwarding path; after receiving the first packet, the method further comprises:
forwarding the first packet on the forwarding path.

16. A packet processing method, which is applied to a first head node and comprises:
sending a first packet on a forwarding path indicated by an SRv6 policy;
wherein, the first packet comprises a first SID, first encapsulation information, and notification information that comprises a first head node address;
the notification information is used to make a data plane of the network device receiving the first packet to send a copied first packet to the control plane of the network device after determining that the first SID is a locally configured proxy SID, and receive the first encapsulation information sent by the control plane, and use the first encapsulation information to update locally cached second encapsulation information.

17. The method of claim 16, wherein before sending the first packet on the forwarding path indicated by the SRv6, the method further comprises:
receiving a first configuration instruction and a second configuration instruction, wherein the first configuration instruction comprises the SRv6 policy;
starting a notification function according to the second configuration instruction;
sending the first packet on the forwarding path indicated by the SRv6 policy comprises:
sending the first packet on the forwarding path indicated by the SRv6 policy with the notification function.

18. The method of claim 17, wherein after receiving the first configuration instruction and the second configuration instruction, the method further comprises:
creating a notification instance, and binding the notification instance to the SRv6 policy; wherein, the notification instance comprises a head node address, life time, a packet sending time interval, whether the network device responds to a packet and a type of a packet;
determining the type of the first packet and generating the first notification information according to the notification instance;
generating an SRH based on the SRv6 policy;
generating the first packet according to the type of the first packet, wherein the first packet comprises the SRH;
sending the first packet on the forwarding path indicated by the SRv6 policy comprises:
sending the first packet on the forwarding path indicated by the SRv6 policy according to the packet sending time interval.

19. The method of claim 18, wherein the type of the first packet is a specified protocol packet or a BFD packet;
when the type of the first packet is a specified protocol packet, the first packet comprises an IPv6 header, a DOH and the SRH; when the type of the first packet is a BFD packet, the first packet comprises an IPv6 header, a DOH, the SRH and a BFD payload;
wherein, the DOH carries the notification information; the BFD payload carries BFD information;
or,
when the type of the first packet is a specified protocol packet, the first packet comprises an IPv6 header and the SRH; when the type of the first packet is a BFD packet, the first packet comprises an IPv6 header, the SRH and a BFD payload;
wherein, the SRH comprises a TLV structure that carries the notification information; the BFD payload carries BFD information.

20. The method of any one of claims 16-19, wherein the notification information comprises a flags field, a sequence number field, a life time field, and a head node address field;
wherein, the flags field comprises 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field comprises 16 bits, which are used to carry a sequence number and are used to indicate whether the forwarding path indicated by the SRv6 policy is changed;
the life time field comprises 32 bits for carrying life time of the encapsulation information;
the head node address field comprises 128 bits for carrying a head node address.

21. The method of claim 16, wherein after sending the first packet on the forwarding path indicated by the SRv6, the method further comprises:
receiving a second packet sent by the network device, wherein the second packet comprises a processing result of the control plane of the network device on the first encapsulation information.

22. A packet processing apparatus, which is applied to a control plane of a network device and comprises:
a receiving module to receive a first packet sent by a data plane of the network device, wherein the first packet comprises a first SID, first encapsulation information, and notification information that comprises a first head node address;
a sending module to, if there is a first cache entry associated with the first SID locally and a second head node address comprised in the first cache entry is the same as the first head node address, send the first SID and the first encapsulation information to the data plane, so that the data plane updates stored second encapsulation information associated with the first SID to the first encapsulation information.

23. The apparatus of claim 22, wherein the first cache entry further comprises third encapsulation information, and the third encapsulation information and the second encapsulation information comprise same content; the apparatus further comprises:
a judging module to determine whether the third encapsulation information is the same as the first encapsulation information;
an update module to update the third encapsulation information to the first encapsulation information if the judgment module determines that the third encapsulation information is different from the first encapsulation information.

24. The apparatus of claim 22, wherein the sending module is further to:
if there is a first cache entry associated with the first SID locally and the second head node address comprised in the first cache entry is different from the first head node address, send a network configuration error prompt to a management platform.

25. The apparatus of claim 22, wherein the notification information further comprises first indication information, a first sequence number and first life time;
the apparatus further comprises:
a judging module to determine, if a value of the first indication information is a first value, whether there is a first cache entry associated with the first SID locally;
a creating module to create a second cache entry associated with the first SID if the judging module determines that there is no first cache entry associated with the first SID locally, wherein the second cache entry comprises the first head node address, the first sequence number, the first life time and the first encapsulation information;
wherein the sending module is further to send the first SID, the first sequence number and the first encapsulation information to the data plane.

26. The apparatus of claim 25, wherein the first cache entry further comprises a timestamp;
the update module is further to:
if the judgment module determines there is a first cache entry associated with the first SID locally, update the timestamp to current time.

27. The apparatus of claim 26, wherein the first cache entry further comprises second life time; the apparatus further comprises:
a deletion module to delete the first cache entry if it is determined according to the timestamp of the first cache entry that the first cache entry has not been updated within the second life time;
the sending module is further to send the first SID to the data plane, so that the data plane deletes the encapsulation information associated with the first SID.

28. The apparatus of claim 25, wherein the apparatus further comprises a deletion module;
the judging module is further to determine, if the value of the first indication information is a second value, whether there is a third cache entry associated with the first SID locally, wherein the third cache entry comprises third encapsulation information and a third head node address;
the deletion module is to delete the third cache entry if the judging module determines there is a third cache entry associated with the first SID locally and the third head node address is the same as the first head node address;
the sending module is further to send the first SID to the data plane, so that the data plane deletes the encapsulation information associated with the first SID.

29. The apparatus of any one of claims 22-27, wherein the notification information further comprises second indication information; the sending module is further to:
if a value of the second indication information is a second value, send a second packet to a first head node indicated by the first head node address, wherein the second packet comprises a processing result of the control plane on the first encapsulation information.

30. The apparatus of claim 22, wherein the first packet is a specified protocol packet; or, the first packet is a BFD packet;
the first packet further comprises a first DOH that carries the notification information; or, the first packet further comprises a first SRH comprising a first TLV structure that carries the notification information.

31. The apparatus of claim 22, wherein the notification information comprises a flags field, a sequence number field, a life time field, and a head node address field;
wherein, the flags field comprises 16 bits, wherein two bits are occupied to carry first indication information and second indication information respectively, and remaining bits are reserved fields;
the sequence number field comprises 16 bits for carrying a sequence number;
the life time field comprises 32 bits for carrying life time of encapsulation information;
the head node address field comprises 128 bits for carrying a head node address.

32. The apparatus of claim 22, wherein the first packet comprises an IPv6 header and an SRH, and the first encapsulation information comprises information indicated by the IPv6 header and information indicated by the SRH.

33. A packet processing apparatus, which is applied to a data plane of a network device and comprises:
a receiving module to receive a first packet, wherein the first packet comprises a first SID, first encapsulation information, and notification information that comprises a first head node address;
a sending module to, if the first SID is a locally configured proxy SID, send a copied first packet to a control plane of the network device;
the receiving module is further to receive the first SID and the first encapsulation information sent by the control plane, and use the first encapsulation information to update locally stored second encapsulation information associated with the first SID;
wherein, the first SID and the first encapsulation information are sent by the control plane when determining that there is a first cache entry associated with the first SID locally and a second head node address comprised in the first cache entry is the same as the first head node address.

34. The apparatus of claim 33, wherein the notification information further comprises a first sequence number;
the sending module is specifically to:
if the first sequence number is different from a second sequence number recorded locally, or the first head node address is different from a second head node address recorded locally, or if there is no encapsulation information associated with the first SID locally, send the copied first packet to the control plane.

35. The apparatus of claim 33 or 34, wherein the apparatus further comprises a cache module;
the receiving module is further to receive a second SID cached by the control plane and third encapsulation information associated with the second SID;
the caching module is to cache the second SID and the third encapsulation information.

36. The apparatus of claim 33, wherein the first packet further comprises a first SRH comprising a first segment list, and the sending module is further to:
forward the first packet on the forwarding path.

37. A packet processing apparatus, which is applied to a first head node and comprises:
a sending module to send the first packet on a forwarding path indicated by an SRv6 policy;
wherein, the first packet comprises a first SID, first encapsulation information, and notification information that comprises a first head node address;
the notification information is used to make a data plane of the network device receiving the first packet to send a copied first packet to the control plane of the network device after determining that the first SID is a locally configured proxy SID, and receive the first encapsulation information sent by the control plane, and use the first encapsulation information to update locally cached second encapsulation information.

38. The apparatus of claim 37, further comprising:
a receiving module to receive a first configuration instruction and a second configuration instruction, wherein the first configuration instruction comprises the SRv6 policy;
a starting module to start a notification function according to the second configuration instruction;
the sending module is specifically to:
send the first packet on the forwarding path indicated by the SRv6 policy with the notification function.

39. The apparatus of claim 38, further comprising:
a creating module to create a notification instance and bind the notification instance to the SRv6 policy; wherein, the notification instance comprises a head node address, life time, a packet sending time interval, whether the network device responds to a packet and a type of a packet;
a generating module to determine the type of the first packet and generate the first notification information according to the notification instance; generate an SRH based on the SRv6 policy; generate the first packet according to the type of the first packet, wherein the first packet comprises the SRH;
wherein the sending module is specifically to send the first packet on the forwarding path indicated by the SRv6 policy according to the packet sending time interval.

40. The apparatus of claim 39, wherein the type of the first packet is a specified protocol packet or a BFD packet;
when the type of the first packet is a specified protocol packet, the first packet comprises an IPv6 header, a DOH and the SRH; when the type of the first packet is a BFD packet, the first packet comprises an IPv6 header, a DOH, the SRH and a BFD payload;
wherein, the DOH carries the notification information; the BFD payload carries BFD information;
or,
when the type of the first packet is a specified protocol packet, the first packet comprises an IPv6 header, and the SRH; when the type of the first packet is a BFD packet, the first packet comprises an IPv6 header, the SRH and a BFD payload;
wherein, the SRH comprises a TLV structure that carries the notification information; the BFD payload carries BFD information.

41. The apparatus of any one of claims 37-40, wherein the notification information comprises a flags field, a sequence number field, a life time field, and a head node address field;
wherein, the flags field comprises 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field comprises 16 bits, which are used to carry a sequence number and are used to indicate whether the forwarding path indicated by the SRv6 policy is changed;
the life time field comprises 32 bits for carrying life time of the encapsulation information;
the head node address field comprises 128 bits for carrying a head node address.

42. The apparatus of claim 37, wherein the receiving module is further to:
receive a second packet sent by the network device, wherein the second packet comprises a processing result of the control plane of the network device on the first encapsulation information.

43. A network device, comprising:
a processor;
a transceiver;
a machine-readable storage medium, which stores machine executable instructions that can be executed by the processor and cause the processor to:
receive a first packet sent by a data plane of the network device through the transceiver, wherein the first packet comprises a first SID, first encapsulation information, and notification information that comprises a first head node address;
if there is a first cache entry associated with the first SID locally and a second head node address comprised in the first cache entry is the same as the first head node address, send the first SID and the first encapsulation information to the data plane through the transceiver, so that the data plane updates stored second encapsulation information associated with the first SID to the first encapsulation information.

44. The network device of claim 43, wherein the first cache entry further comprises third encapsulation information, and the third encapsulation information and the second encapsulation information comprise same content; the machine executable instructions further cause the processor to:
determine whether the third encapsulation information is the same as the first encapsulation information;
if the third encapsulation information is different from the first encapsulation information, update the third encapsulation information to the first encapsulation information.

45. The network device of claim 43, wherein the machine executable instructions further cause the processor to:
if there is a first cache entry associated with the first SID locally, and the second head node address comprised in the first cache entry is different from the first head node address, send a network configuration error prompt to a management platform through the transceiver.

46. The network device of claim 43, wherein the notification information further comprises first indication information, a first sequence number and first life time;
the machine executable instructions further cause the processor to:
if a value of the first indication information is a first value, determine whether there is a first cache entry associated with the first SID locally;
if there is no first cache entry associated with the first SID locally, create a second cache entry associated with the first SID, wherein the second cache entry comprises the first head node address, the first sequence number, the first life time and the first encapsulation information;
send the first SID, the first sequence number and the first encapsulation information to the data plane through the transceiver.

47. The network device of claim 46, wherein the first cache entry further comprises a timestamp;
the machine executable instructions further cause the processor to:
if there is a first cache entry associated with the first SID locally, update the timestamp to current time.

48. The network device of claim 47, wherein the first cache entry further comprises second life time; the machine executable instructions further cause the processor to:
if it is determined according to the timestamp of the first cache entry that the first cache entry has not been updated within the second life time, delete the first cache entry;
send the first SID to the data plane through the transceiver, so that the data plane deletes the encapsulation information associated with the first SID.

49. The network device of claim 46, wherein the machine executable instructions further cause the processor to:
if the value of the first indication information is a second value, determine whether there is a third cache entry associated with the first SID locally, wherein the third cache entry comprises third encapsulation information and a third head node address;
if there is a third cache entry associated with the first SID locally, and the third head node address is the same as the first head node address, delete the third cache entry;
send the first SID to the data plane through the transceiver, so that the data plane deletes the encapsulation information associated with the first SID.

50. The network device of any one of claims 43-48, wherein the notification information further comprises second indication information; the machine executable instructions further cause the processor to:
if a value of the second indication information is a second value, send a second packet to a first head node indicated by the first head node address through the transceiver, wherein the second packet comprises a processing result of the control plane on the first encapsulation information.

51. The network device of claim 43, wherein the first packet is a specified protocol packet; or, the first packet is a BFD packet;
the first packet further comprises a first DOH that carries the notification information; or, the first packet further comprises a first SRH comprising a first TLV structure that carries the notification information.

52. The network device of claim 43, wherein the notification information comprises a flags field, a sequence number field, a life time field, and a head node address field;
wherein, the flags field comprises 16 bits, wherein two bits are occupied to carry first indication information and second indication information respectively, and remaining bits are reserved fields;
the sequence number field comprises 16 bits for carrying a sequence number;
the life time field comprises 32 bits for carrying life time of encapsulation information;
the head node address field comprises 128 bits for carrying a head node address.

53. The network device of claim 43, wherein the first packet comprises an IPv6 header and an SRH, and the first encapsulation information comprises information indicated by the IPv6 header and information indicated by the SRH.

54. A network device, comprising:
a processor;
a transceiver;
a machine-readable storage medium, which stores machine executable instructions that can be executed by the processor and cause the processor to:
receive a first packet through the transceiver, wherein the first packet comprises a first SID, first encapsulation information, and notification information that comprises a first head node address;
if the first SID is a locally configured proxy SID, send a copied first packet to a control plane of the network device through the transceiver;
receive the first SID and the first encapsulation information sent by the control plane through the transceiver, and use the first encapsulation information to update locally stored second encapsulation information associated with the first SID;
wherein, the first SID and the first encapsulation information are sent by the control plane when determining that there is a first cache entry associated with the first SID locally and a second head node address comprised in the first cache entry is the same as the first head node address.

55. The network device of claim 54, wherein the notification information further comprises a first sequence number;
the machine executable instructions further cause the processor to:
if the first sequence number is different from a second sequence number recorded locally, or the first head node address is different from a second head node address recorded locally, or if there is no encapsulation information associated with the first SID locally, send the copied first packet to the control plane through the transceiver.

56. The network device of claim 54 or 55, wherein the machine executable instructions further cause the processor to:
receive a second SID cached by the control plane and third encapsulation information associated with the second SID through the transceiver;
cache the second SID and the third encapsulation information.

57. The network device of claim 54, wherein the first packet further comprises a first SRH, comprising a first segment list used to indicate a forwarding path; the machine executable instructions further cause the processor to:
forward the first packet on the forwarding path through the transceiver.

58. A head node comprising:
a processor;
a transceiver;
a machine-readable storage medium, which stores machine executable instructions that can be executed by the processor and cause the processor to:
send the first packet on a forwarding path indicated by an SRv6 policy through the transceiver;
wherein, the first packet comprises a first SID, first encapsulation information, and notification information that comprises a first head node address;
the notification information is used to make a data plane of the network device receiving the first packet to send a copied first packet to the control plane of the network device after determining that the first SID is a locally configured proxy SID, and receive the first encapsulation information sent by the control plane, and use the first encapsulation information to update locally cached second encapsulation information.

59. The head node of claim 58, wherein the machine executable instructions further cause the processor to:
receive a first configuration instruction and a second configuration instruction through the transceiver, wherein the first configuration instruction comprises the SRv6 policy;
start a notification function according to the second configuration instruction;
send the first packet on the forwarding path indicated by the SRv6 policy with the notification function through the transceiver.

60. The head node of claim 59, wherein the machine executable instructions further cause the processor to:
create a notification instance and bind the notification instance to the SRv6 policy; wherein, the notification instance comprises a head node address, life time, a packet sending time interval, whether the network device responds to a packet and a type of a packet;
determine the type of the first packet and generate the first notification information according to the notification instance;
generate an SRH based on the SRv6 policy;
generate the first packet according to the type of the first packet, wherein the first packet comprises the SRH;
send the first packet on the forwarding path indicated by the SRv6 policy according to the packet sending time interval through the transceiver.

61. The head node of claim 60, wherein the type of the first packet is a specified protocol packet or a BFD packet;
when the type of the first packet is a specified protocol packet, the first packet comprises an IPv6 header, a DOH and the SRH; when the type of the first packet is a BFD packet, the first packet comprises an IPv6 header, a DOH, the SRH and a BFD payload;
wherein, the DOH carries the notification information; the BFD payload carries BFD information;
or,
when the type of the first packet is a specified protocol packet, the first packet comprises an IPv6 header, and the SRH; when the type of the first packet is a BFD packet, the first packet comprises an IPv6 header, the SRH and a BFD payload;
wherein, the SRH comprises a TLV structure that carries the notification information; the BFD payload carries BFD information.

62. The head node of any one of claims 58-61, wherein the notification information comprises a flags field, a sequence number field, a life time field, and a head node address field;
wherein, the flags field comprises 16 bits, wherein two bits are occupied to carry first indication information and second indication information respectively, and remaining bits are reserved fields;
when the first indication information takes a value of a first value, it indicates an operation of updating a cache entry, and when the first indication information takes a value of a second value, it indicates an operation of deleting a cache entry;
when the second indication information takes a value of the second value, it indicates that the network device shall respond to a packet, and when the second indication information takes a value of the first value, it indicates that the network device shall not respond to a packet;
the sequence number field comprises 16 bits, which are used to carry a sequence number and are used to indicate whether the forwarding path indicated by the SRv6 policy is changed;
the life time field comprises 32 bits for carrying life time of the encapsulation information;
the head node address field comprises 128 bits for carrying a head node address.

63. The head node of claim 58, wherein the machine executable instructions further cause the processor to:
receive a second packet sent by the network device through the transceiver, wherein the second packet comprises a processing result of the control plane of the network device on the first encapsulation information.

64. A machine-readable storage medium storing machine executable instructions that, when invoked and executed by a processor, cause the processor to implement the method of any one of claims 1-11, 12-15, or 16-21.

65. A computer program product, which causes a processor to perform the method of any one of claims 1-11, 12-15, or 16-21.
